# EUROPÄISCHE PATENTANMELDUNG

(11) **EP 1 072 828 A2**
(43) Veröffentlichungstag der Anmeldung: **31.01.2001**
(21) Anmeldenummer: 99118307.0
(22) Anmeldetag: 15.09.1999
(51) Int. Cl.: F16J 15/10

(54) **Dichtungsring**

(30) Priorität: 29.07.1999 DE 29913031 U
(71) Anmelder: POPPE + CO. GIESSENER GUMMIWARENFABRIK GMBH & CO. KG, D-35392 Giessen (DE)
(72) Erfinder: Wooge, Christian, 61350 Bad Homburg (DE)
(74) Vertreter: Missling, Arne, Dipl.-Ing.

(57) **Zusammenfassung**

Die Erfindung betrifft einen Dichtungsring, wie er vielfältigerweise z. B. in Rohrverschraubungen, Rohranschlüssen oder ähnlichen eingesetzt wird. Ein derartiger Dichtungsring soll einerseits hochbeständig gegenüber dem durchgeleitetem Medium und gleichzeitig kostengünstig herzustellen sein. Dabei soll der Dichtungsring insbesondere auch beständig gegen von außen und innen unterschiedlich aggressiv wirkende Medien sein. Der erfindungsgemäße Dichtungsring besteht daher aus zwei oder mehreren Ringen (1, 2) unterschiedlichen Materials, welche konzentrisch ineinander liegen, wobei die Außenfläche der innenliegenden Ringe und die Innenfläche der benachbarten außenliegenden Ringe miteinander verbunden sind. Außerdem hat der Dichtungsring einen im wesentlichen rechteckigen Querschnitt.

## Beschreibung

Die Erfindung betrifft einen Dichtungsring, wie er beispielsweise in Rohrverschraubungen, Rohranschlüssen und ähnliches eingesetzt wird.

Derartige Dichtungen kommen mit dem durch die Rohrleitung geleiteten Medium in Kontakt. Bei diesen Medien kann es sich insbesondere in der Verfahrenstechnik um aggresive, die Dichtung angreifende Medien handeln. Ebenso ist es möglich, dass die Medien eine Temperatur haben, bei welcher die Dichtungsringe sich zersetzen. Deshalb werden Werkstoffe verwendet, welche widerstandsfähig gegen die verschiedensten aggresiven Medien und gegen Zersetzung durch Temperatureinflüsse sind. Nachteil dieser Werkstoffe ist, dass deren Herstellung zum Teil sehr teuer ist.

Der Erfindung liegt daher die Aufgabe zugrunde, einen Dichtungsring vorzuschlagen, welcher einerseits hochbeständig gegenüber dem durchgeleitetem Medium ist und gleichzeitig kostengünstig herzustellen ist, bzw. dass der Dichtungsring beständig gegen von außen und innen unterschiedlich aggresiv wirkende Medien ist.

Diese Aufgabe wird erfindungsgemäß dadurch gelöst, dass der Dichtungsring aus zwei oder mehr Ringen unterschiedlichen Materials besteht, welche konzentrisch ineinanderliegen, wobei die Außenfläche der innenliegenden Ringe und die Innenfläche der benachbarten außenliegenden Ringe miteinander verbunden sind und dass der Dichtungsring einen im Wesentlichen rechteckigen Querschnitt aufweist.

Durch die Ausbildung des Dichtungsringes aus zumindest zwei Ringen unterschiedlichen Materials besteht nun die Möglichkeit, das Material der Ringe an das jeweils mit dem Ring in Kontakt kommende Medium - sei es innerhalb oder auch außerhalb der Leitung - anzupassen.

Erfindungsgemäß kann dabei ein erster Ring aus einem hochbeständigen Elastomer bestehen, während ein zweiter Ring aus einem wenig beständigen Elastomer besteht.

Das hochbeständige Elastomer ist dabei regelmäßig teurer in der Herstellung, während das weniger beständige Elastomer kostengünstiger ist. Das hochbeständige Elastomer wird dann auf der Seite des Dichtungsringes angeordnet, welche mit dem aggresiven Medium in Kontakt kommt, während das weniger beständige Elastomer den übrigen Teil des Dichtungsringes ausmacht.

Vorteilhaft ist das hochbeständige Elastomer besonders widerstandsfähig gegenüber Temperatureinflüssen und/oder aber gegenüber chemischen Einflüssen.

In einer vorteilhaften Ausführung kann der Dichtungsring zwischen den Ringen eine Zwischenschicht aufweisen. Diese Zwischenschicht kann vorteilhaft aus einer Komponenten bestehen, die sich sowohl mit der hochbeständigen als auch mit dem weniger beständigen Elastomer-Ring verbindet.

Gemäß der Erfindung können die Ringe eine unterschiedliche Schichtdicke aufweisen. Damit kann insbesondere der hochbeständige, in der Regel teurere Elastomer-Ring so dünn wie nötig ausgeführt werden. Die weniger beständige, kostengünstige Ring bildet dann sozusagen ein Skelett, welches den hochbeständigen Ring stützt.

Ein erfindungsgemäßes Ausführungsbeispiel ist anhand der Zeichnung näher beschrieben. Darin zeigt
- Fig. 1: eine Draufsicht auf einen Dichtungsring und
- Fig. 2: einen Schnitt durch den Dichtungsring gemäß Fig. 1.

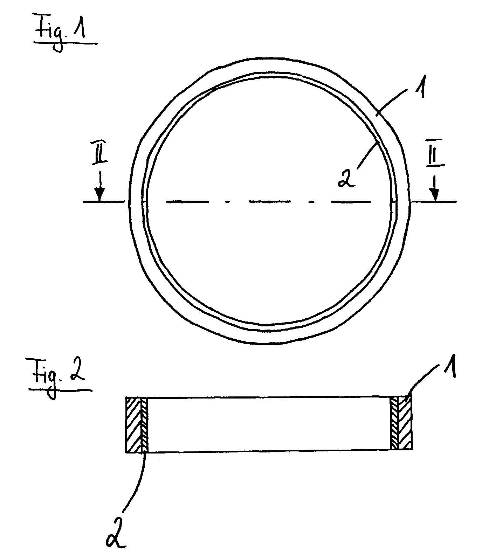

Das erfindungsgemäße Ausführungsbeispiel für einen Dichtungsring besteht aus zwei ineinanderliegenden, konzentrischen Ringen 1, 2, welche miteinander verbunden sind. Beide Ringe 1, 2 haben einen rechteckigen Querschnitt, so dass der Dichtungsring insgesamt auch einen rechteckigen Querschnitt hat.

Der innere Ring 2 ist dünner ausgeführt und besteht aus einem hochbeständigen Elastomer. Dieser Ring 2 bekommt die notwendige Stabilität durch den äußeren, dickeren Ring 1 aus einem weniger beständigen Elastomer. Somit erhält man durch die Kombination der beiden Ringe 1, 2 einen vollwertigen, kostengünstigen Dichtungsring, der zum Abdichten von Rohrverschraubungen für Leitungen mit aggresiven Medien geeignet ist.

## Patentansprüche

1. Dichtungsring
dadurch gekennzeichnet, dass
der Dichtungsring aus zwei oder mehr Ringen (1, 2) unterschiedlichen Materials besteht, welche konzentrisch ineinanderliegen, wobei die Außenfläche der innenliegenden Ringe (2) und die Innenfläche der benachbarten außenliegenden Ringe (1) miteinander verbunden sind und dass der Dichtungsring einen im Wesentlichen rechteckigen Querschnitt aufweist.

2. Dichtungsring nach Anspruch 1, dadurch gekennzeichnet, dass ein erster Ring (2) aus einem hochbeständigen Elastomer besteht, während ein zweiter Ring (1) aus einem weniger beständigen Elastomer besteht.

3. Dichtungsring nach Anspruch 2, dadurch gekennzeichnet, dass das hochbeständige Elastomer insbesondere gegenüber Temperatureinflüssen widerstandsfähig ist.

4. Dichtungsring nach Anspruch 2 oder 3, dadurch gekennzeichnet, dass das hochbeständige Elastomer insbesondere gegenüber chemischen Einflüssen widerstandsfähig ist.

5. Dichtungsring nach Anspruch 4, dadurch gekennzeichnet, dass der Dichtungsring zwischen den Ringen (1, 2) eine Zwischenschicht aufweist.

6. Dichtungsring nach Anspruch 5, dadurch gekennzeichnet, dass die Zwischenschicht aus einem Material besteht, das die beiden Elastomere verbindet.

7. Dichtungsring nach einem der Ansprüche 1 bis 5 dadurch gekennzeichnet, dass die Ringe (1, 2) eine unterschiedliche Schichtdicke haben.
